# EUROPÄISCHE PATENTSCHRIFT

(11) **EP 0 383 120 B1**
(45) Veröffentlichungstag und Bekanntmachung des Hinweises auf die Patenterteilung: **15.12.1993**
(21) Anmeldenummer: 90102144.4
(22) Anmeldetag: 03.02.1990
(51) Int. Cl.: A01D 80/00

(54) **Landwirtschafliche Erntemaschine mit einer Tast-und Stützrädervorrichtung**
Agricultural harvesting machine with a touch and support wheel device
Moissonneuse agricole avec un dispositif de roues palpeuses et de support

(30) Priorität: 14.02.1989 DE 8901707 U
(43) Veröffentlichungstag der Anmeldung: 22.08.1990
(73) Patentinhaber: Alois Pöttinger Maschinenfabrik GmbH, A-4710 Grieskirchen (AT)
(72) Erfinder: Rauscher, Sigurd, A-4710 Grieskirchen (AT)
(74) Vertreter: Dupal, Helmut, Dipl-Ing.

(56) Entgegenhaltungen:
- DE-A- 2 622 486
- DE-B- 1 932 229
- DE-B- 2 002 746
- FR-A- 2 146 674

## Beschreibung

Die Erfindung betrifft eine landwirtschaftliche Erntemaschine, wie Zetter, Schwader, Aufsammelvorrichtung für Selbstladewagen, Erntevorsatz von Feldhäckslern oder Ballenpresse mit einer Tast-und Stützrädervorrichtung.

Bei Maschinen der eingangs genannten Art streichen die Spitzen von Rechzinken in sehr geringem Abstand über den Boden, so daß sie sich bei Bodenunebenheiten sehr leicht entweder von der Bodenoberfläche entfernen, oder in diese hineinstechen, das eine unerwünscht wegen der mangelhaften Bearbeitung des Futters, das andere wegen der dadurch eintretenden Futterverschmutzung.

Mit zunehmenden Arbeitsbreiten der vorgenannten Maschinen und zunehmenden Arbeitsgeschwindigkeiten laufen die Maschinen unruhig über den Boden und die Bodenanpassung der Spitzen der Rechzinken wird zunehmend schlechter.

Zur Vermeidung dieses Nachteiles wird in der DE-U-88 11 010 vorgeschlagen, an einer Heuwerbungsmaschine zum Schwaden - ziehen die üblichen beiden Tasträder, die an einer höhenverstellbaren Laufachse am unteren Ende der Stützachse der Maschine angebracht sind, durch eine Tandemanordnung von Tasträdern zu ersetzen, bei der je zwei Tasträder an einer Doppelschwinge, in Arbeitsrichtung und damit Fahrtrichtung hintereinander gelagert sind, die selbst um die Tastradachse schwenkbar gelagert ist; eine Anordnung wie sie zum gleichen Zweck des ruhigeren Laufes bereits an schweren Selbstladewagen in der Landtechnik oder an Straßenfahrzeugen allgemein bekannt ist.

Bei dieser vorgeschlagenen Verbesserung ist die erzielte Wirkung von den Abmessungen der Doppelschwinge festgelegt, die wegen des gewöhnlich sehr beschränkten Raumes nur in engen Grenzen abgeändert werden können. Zudem ist es nicht möglich, Herstellungsungenauigkeiten auszugleichen, die eine Schräglage der Maschine quer zur Arbeitsrichtung hervorrufen und deren Vermeidung hohe Herstellgenauigkeit oder entsprechend großen Aufwand für deren Beseitigung erfordert. Die Anwendung einer Doppelschinge bei Heuwerbungsmaschinen macht die Anwendung von Anschlägen für die Doppelschwinge nach oben zu erforderlich, damit die Tasträder nicht in den Bereich bewegter Maschinenteile gelangen.

Aus der FR-A-21 46 674 schließlich ist eine Heuwerbungsmaschine bekannt, mit zwei Rechrädern, von denen eines mit lenkbaren, nebeneinanderliegenden Stützrädern versehen ist, wobei die Schwenkachsen der Radträger mit Lenkhebel verbunden sind, die über Spurstangen gegensinnig gekoppelt sind und dadurch ein Zusammenstellen in Arbeitsrichtung oder parallel zueinander in Transportstellung ermöglichen; allerdings ist eine Kopplung der Höhenbewegung der Stützräder damit nicht möglich und ist auch dadurch nicht nahegelegt.

Weiters ist es aus der DE-B-20 02 746 bekannt, bei Heuwerbungsmaschinen zum Zetten mit mehreren Rechrädern bei den beiden inneren Rechrädern zwei Stützräder in Arbeitsrichtung und damit in Fahrtrichtung hintereinander anzuordnen, wobei in der Arbeitsstellung nur das vordere und in der Transportstellung, durch Verschwenken der Maschine um eine Querachse, beide Räder auf dem Boden laufen und so eine bessere Abstützung ergeben.

Aus der DE-B-19 32 229 ist eine Heuwerbungsmaschine mit zwei Rechrädern bekannt geworden, bei der die Rechräder von je einem Tastrad abgestützt werden, das auf einer Konsole der Rechradachse mit einem Radträger höhenverschwenkbar gelagert und mit einer Verstellspindel höheneinstellbar eingerichtet ist. Das hintere Rechrad ist zusätzlich mit einem weiteren Stützrad am Boden geführt, das über einen Arm an der Konsole lösbar befestigt ist.

Der Vorteil einer ruhigeren Fahrweise, wie bei Anwendung einer Tandemanordnung der Tasträder, ist dadurch nicht zu erreichen.

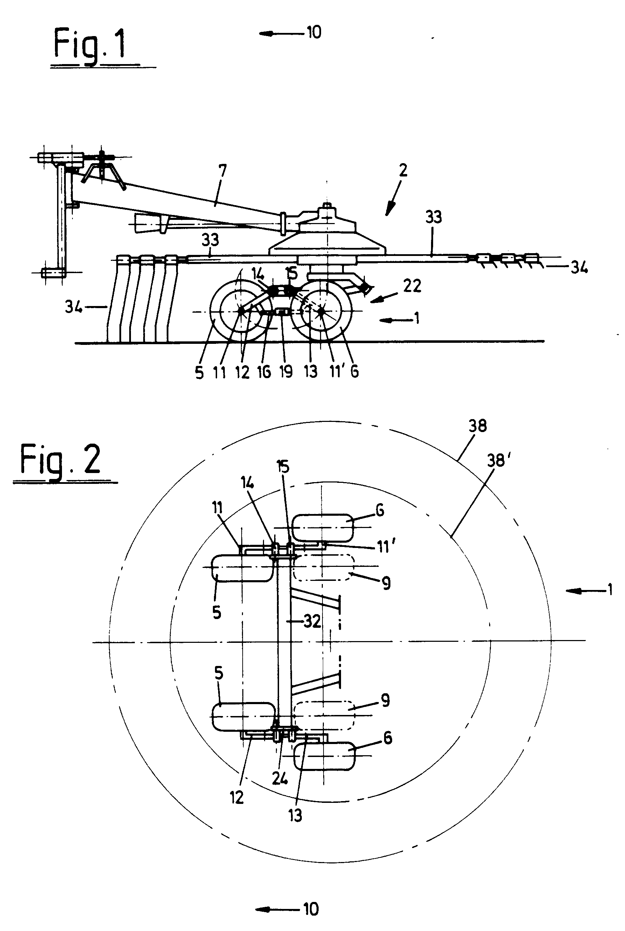

In der DE-A-26 22 486 wird eine Heuwerbungsmaschine beschrieben, bei der die am Rahmen nach innen zu liegenden Rechräder mit je zwei parallel angeordneten Tasträdern versehen sind, wie den Fig.1 bis 5 zu entnehmen ist.

Eine Lösung der bei Aufsammeltrommeln an Selbstladewagen, Aufsammelpressen oder Vorsätzen für Feldhäcksler auftretenden Probleme, bei denen ein ruhiger Lauf und der Ausgleich von Bodenunebenheiten und ebenso wie bei den Heuwerbungsmaschinen auf feuchten, weichen Böden, der Ausgleich der eingetieften Schlepperspuren und die Abstimmung der Höheneinstellung zwischen den Tasträdern beider Seiten, in gleicher Weise wichtig ist, wie bei den Heuwerbungsmaschinen, ist bisher nicht vorgeschlagen worden.

Aufgabe der Erfindung ist es, bei einer landwirtschaftlichen Erntemaschine der eingangs beschriebenen Gattung diese Nachteile zu beseitigen und das Fahrverhalten beim Queren starker Bodenunebenheiten, wie tiefen Spurrillen von Schleppern od.dgl., zu verbessern.

Diese Aufgabe wird bei einer landwirtschaftlichen Erntemaschine nach dem Gattungsbegriff des Anspruches 1 durch dessen kennzeichnende Merkmale gelöst.

Es ergeben sich dadurch mehrere Möglichkeiten den Bewegungsablauf der beiden Schwenkarme zu verändern und dadurch an unterschiedlichen landwirtschaftlichen Erntemaschinen anzuwenden, wobei durch die auf Mitnahme gekoppelten Schwenkarme die Verwendung von Anschlägen für diese entfallen kann, wodurch die Stoßbelastung der Maschine herabgesetzt ist; gleichzeitig ergeben sich Möglichkeiten, die Mitnahme zwischen den Schwenkarmen unterschiedlich zu übersetzen, um eine mehr oder weniger empfindliche Übertragung der Bewegungen zu erreichen oder durch die Einstellbarkeit der Länge wenigstens einer der Verbindungsstreben die Querneigung der Maschine zu korrigieren oder durch ein Federelement das Fahrverhalten zu verbessern.

Insgesamt ist es dadurch möglich, eine höhere Arbeitsgeschwindigkeit bei gleichzeitig ruhigerem Lauf der Maschine einzuhalten.

In den Unteransprüchen 2 bis 13, auf die als Teil der Beschreibung besonders verwiesen wird, sind besonders vorteilhafte Fortbildungen der Erfindung beansprucht.

Ganz besonders vorteilhaft ist es, die Verbindungsstrebe in der Länge einstellbar auszubilden, wodurch ein Justieren der Maschine hinsichtlich der Querneigung wesentlich erleichtert und verbilligt wird.

Die Versetzung der Tasträder ergibt besonders guten Ausgleich bei Befahren weichen Bodens, in dem Schlepperspurrillen eingefahren sind. Im gleichen Sinn wirken paarweise Anordnungen von Tasträdern an den Schwenkarmen, die besonders bei Aufsammeltrommeln eine günstige Ausgleichswirkung ergeben.

Bei Schwenkarmen mit etwa fluchtender, waagrechter Ausgangslage ist die Kopplung durch Anbringung von vorzugsweise nach oben gerichteten Auslegern an den Schwenkarmen möglich, wobei Länge und Anbringungsort entsprechende Übersetzungen der Bewegungen der Schwenkarme ergeben.

Zum Abfangen besonders großer Beschleunigungskräfte ist der Einbau von federnden Elementen in die Verbindungsstrebe günstig, um die Stoßbelastung der Maschine zu senken.

Die Möglichkeit, die Anlenkstelle an dem Schwenkarm zu verstellen, ermöglicht die Anpassung an unterschiedliche Maschinentypen oder unterschiedliche Bewegungsabläufe, die eingestellt werden sollen.

Besonders vereinfacht ist die Anbringung der Tast- und Stützrädervorrichtung bei Verwendung einer Montageplatte, wobei die Anbringung eines Anschlages oder einer Verriegelung die Festlegung der Montageplatte wesentlich vereinfacht.

Für einen günstigen Bewegungsausgleich ist es vorteilhaft, wenn die Schwenklager im Verhältnis zu ihrer Länge in geringem Abstand voneinander angebracht sind.

Besonders vorteilhaft ist die Anbringung je einer Tast- und Stützrädervorrichtung jeweils anstelle eines Tast- oder Stützrades, wie bei Heuwerbungsmaschinen zum Schwaden, Zetten oder an Aufsammeltrommeln.

Die Erfindung wird anhand der Zeichnung einiger Ausführungsbeispiele beschrieben.
Es zeigen
- Fig. 1: eine Heuwerbungsmaschine zum Schwaden mit der Tastradvorrichtung in Seitenansicht, schematisch,
- Fig. 2: die Tastradvorrichtung nach Fig. 1 von oben gesehen, die Schwadmaschine weggenommen gedacht,
- Fig. 3: eine Ausführungsform einer Tastradvorrichtung mit den Schwenkarmen in waagrechter Ausgangslage und einer mit Verstellschloß versehenen Verbindungsstrebe,
- Fig. 4: die Anbringung einer Montageplatte für die Tastradvorrichtung an einer bestehenden Radachse in Draufsicht auf einen Teilausschnitt,
- Fig. 5: eine Seitenteilansicht einer Tastradvorrichtung mit Schwenkarmen in geneigter Ausgangslage und mit einer Verbindungsstrebe mit einem Federelement und mit einer verstellbaren Anlenkstelle an einem Schwenkarm,
- Fig. 6: eine Draufsicht auf eine Tastradvorrichtung einer Heuwerbungsmaschine zum Zetten und Breitstreuen, die Rechkreiselbereiche angedeutet und die Maschine weggelassen und
- Fig. 7: eine Draufsicht auf eine Tastradvorrichtung an einer Seite einer Aufsammeltrommel in Teilansicht, die unterschiedliche Tastradausstattung angedeutet.

In Fig.1 ist eine Schwadmaschine 2 mit einer Tast-und Stützradvorrichtung 1 dargestellt, die aus einem vorderen Stützrad 5 und einem hinteren Stützrad 6 an jeder Maschinenseite besteht, die an Schwenkarmen 12,13 mit Tast-oder Stützradachsen 11,11′ gelagert sind, die ihrerseits an dem Untergestell 32 an einem vorderen Schwenkarmlager 14 und einem hinteren Schwenkarmlager 15 angelenkt sind, die waagrecht voneinander beabstandet sind.

Die Stützräder 5,6 laufen in Arbeitsrichtung 10 gesehen um eine Spurbreite versetzt hintereinander (Fig.2 ), wobei das vordere Stützrad 5 an der Innenseite und das hintere Stützrad 6 an der Außenseite des zugeordneten Schwenkarmes 12 und 13 angeordnet ist, um den zur Verfügung stehenden Raum unterhalb der Recharme 33 und Rechzinken 34 auszunutzen.

Die beiden Schwenkarme 12 und 13 sind mit den Enden 17,17′ einer Verbindungsstrebe 16 gelenkig auf Mitnahme verbunden, die mit einem längenverstellbaren Einstellelement 19 in Form einer Verschraubung versehen ist, mit der die Neigung der Schwenkarme 12,13 zur Waagrechten vorgenommen werden kann, wodurch die Querneigung des Maschinenrahmens 7 durch Verstellung einer Verschraubung korrigierbar ist.

Die Schwenkarme 12,13 nehmen in ihrer geneigten Ausgangslage 22 eine nach vorne und rückwärts abwärts weisende Stellung ein.

In Fig.2 ist die Draufsicht mit zwei der beschriebenen Anordnungen beiderseits des Untergestelles 32 dargestellt. Der Rechbereich der Rechzinken 34 ist angedeutet; ebenso zusätzliche Tasträder 9 an den hinteren Schwenkarmen 13.

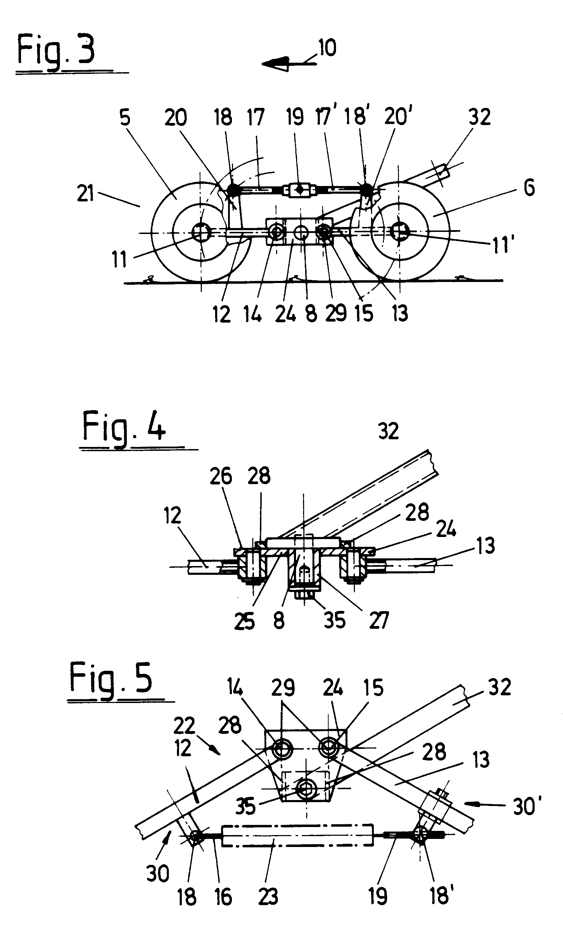

Bei einer Anordnung der Schwenkarme 12,13 in einer waagrechten Ausgangslage 21 (Fig.3) ist die Verbindungsstrebe 16 an Auslegern 20 und 20′ in den Gelenken 18,18′ gelagert, die wieder mit einem längenverstellbaren Einstellelement 19 versehen ist.

Die Schwenkarmlager 14,15 sind auf einer Montageplatte 24 angebracht, die mit einem Radachssitz 27 auf der Radachse 8 des vorher vorgesehenen einfachen Stützrades aufgesetzt ist.

Wie Fig.4 zeigt,sind als Schwenkarmlager 14,15 Bolzen in die Montageplatte 24 eingesetzt. In die Montageplatte 24 ist ein Rohr als Radachssitz 27 eingesetzt, mit der sie auf die Radachse 8 aufgeschoben wird und mit den beidseitigen Anschlägen 28 gegen Verdrehen und seitlich mit der Verschraubung 35 gesichert ist.

In Fig.5 ist die Montageplatte 24 in Seitenansicht dargestellt, wobei die beiden Schwenkarme 12,13 an Auslegern 20, 20′ die Verbindungsstrebe 16 tragen, die von einem Federelement 23 gebildet ist, dessen Ansprechschwelle über der Normalbelastung der Verbindungsstrebe 16 liegt. Die Verbindungsstrebe 16 ist mit einem längenverstellbaren Einstellelement 19 versehen und ein Ausleger 20′ ist an der Anlenkstelle 30′ entlang des Schwenkarmes 13 verstellbar eingerichtet.

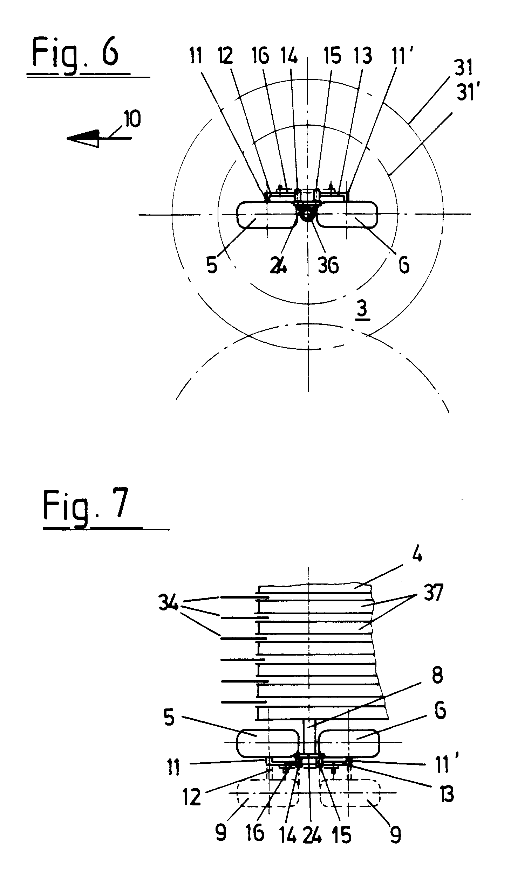

In Fig.6 ist eine Tastradvorrichtung 1 wiedergegeben,bei der die Tasträder 5 und 6 in einer Spur angeordnet sind und die Schwenkarme 12,13 an einer Montageplatte 24 gelagert sind, die an einer geschnitten dargestellten Stützachse 36 befestigt ist. Bei der dargestellten Tastradvorrichtung 1 sind die Rechkreise 31,31′ der beiden inneren Rechräder einer Maschine zum Zetten und Breitstreuen angedeutet und für ein Rechrad ist die Tastradvorrichtung 1 dargestellt, auf der das Rechrad abgestützt ist.

Bei Aufsammeltrommeln 4 von Selbstladewagen, Aufsammelpressen, Erntevorsätzen von Feldhäckslern sind beiderseits Tasträder vorgesehen, welche die Rechzinken der Aufsammeltrommel 4 im geeigneten Bodenabstand halten sollen, bei dem eine einwandfreie Arbeit sichergestellt ist.

In Fig.7 ist eine Tastradvorrichtung 1 an einem Ende einer Aufsammeltrommel 4 ähnlich angebracht, wie dies für die Schwadmaschine 2 bereits oben beschrieben wurde. Von der Aufsammeltrommel 4 sind die Abstreifer 37 und die Rechzinken 34, die zwischen diesen herausragen, und die Tastradachse 8 dargestellt.

Die Tasträder 5 und 6 liegen auf einer Seite der Schwenkarme 12,13, die auf einer auf der Tastradachse 8 aufgesetzten Montageplatte 24 angelenkt sind. Zusätzliche Tasträder 9 sind an beiden Schwenkarmen 12,13 angedeutet.

Mit diesen Tast-und Stützradvorrichtungen 1 ist es möglich neben der Verminderung bis zur Hälfte der Höhenabweichung der Rechzinken durch auftretende Bodenunebenheiten, zusätzlich Störungen durch Spurrillen von Schlepperreifen zu vermeiden und Abweichungen im Bodeneingriff der Rechzinken 34 quer zur Arbeitsrichtung 10 auszugleichen und sehr starke Stoßbelastungen abzufangen.

### Legende : EM 15 012

- 1: Tast-und Stützrädervorrichtung
- 2: Heuwerbungsmaschine zum Schwaden
- 3: Heuwerbungsmaschine zum Zetten und Breitstreuen
- 4: Aufsammeltrommel
- 5: vorderes Tast-oder Stützrad
- 6: hinteres Tast-oder Stützrad
- 7: Trag-oder Maschinenrahmen
- 8: Radachse des Trag-oder Maschinenrahmens 7
- 9: zusätzliche Tasträder
- 10: Arbeitsrichtung
- 11,11′: Tast-oder Stützradachsen
- 12: vorderer Schwenkarm
- 13: hinterer Schwenkarm
- 14: vorderes Schwenkarmlager
- 15: hinteres Schwenkarmlager
- 16: Verbindungsstrebe
- 17,17′: Enden der Verbindungsstrebe
- 18,18′: Gelenke für die Verbindungsstrebe 16 an den Schwenkarmen 12,13
- 19: längenverstellbares Einstellelement
- 20,20′: Ausleger der Schwenkarme 12,13 für die Verbindungsstrebe 16
- 21: waagrechte Ausgangslage der Schwenkarme 12,13
- 22: geneigte Ausgangslage der Schwenkarme 12,13
- 23: Federelement
- 24: Montageplatte
- 25: Außenseite der Montageplatte 24
- 26: Innenseite der Montageplatte 24
- 27: Radachssitz
- 28: Anschlag oder Verriegelung für die Montageplatte 24
- 29: Abstand der Schwenkarmlager 14,15 voneinander
- 30,30′: Anlenkstellen der Verbindungsstrebe 16 an den Schwenkarmen 12,13
- 31,31′: Rechkreise der inneren Rechräder einer Streumaschine 3
- 32: Untergestell des Maschinenrahmens
- 33: Recharm
- 34: Rechzinken der Heuwerbungsmaschine 2,3 oder der Aufsammeltrommel 4
- 35: Verschraubung der Radachse 8
- 36: Stützachse
- 37: Abstreifer der Aufsammeltrommel 4
- 38,38′: Rechkreise der Schwadmaschine 2

## Patentansprüche

1. Landwirtschaftliche Erntemaschine, mit einem Trag- oder Maschinenrahmen (7), an dem eine Tast- und Stützrädervorrichtung angebracht ist, bei der an waagrecht ausgerichteten Radachsen (8) die Tasträder gelagert sind, und an welcher Schwenkarme (12,13) angebracht sind, die in Schwenkarmlagern (14,15) in waagrechtem Abstand voneinander gelagert sind und mit einer Verbindungsstrebe (16), mit der im Arbeitsrichtung gesehen ein vorderer (12) und ein hinterer Schwenkarm (13) gelenkig auf Mitnahme verbunden sind, dadurch gekennzeichnet, daß die Schwenkarme (12,13) in waagrecht ausgerichteten Schwenkarmlagern (14,15) gelagert sind und bezogen auf die Arbeitsrichtung (10) der vordere Schwenkarm (12) im vorderen Schwenkarmlager (14) gelagert ist und in Arbeitsrichtung (10) gerichtet ist, während der hintere Schwenkarm (13) am hinteren Schwenkarmlager (15) gelagert ist und gegen die Arbeitsrichtung (10) gerichtet ist und wenigstens die Verbindungsstrebe (16) einer Seite des Trag- oder Maschinenrahmens (7) ein längenverstellbares Einstellelement (19) oder ein Federelement (23) aufweist.

2. Landwirtschaftliche Erntemaschine nach Anspruch 1, dadurch gekennzeichnet, daß die Verbindungsstrebe (16) im wesentlichen aus einem längenverstellbaren Einstellelement (19), insbesonders in Form einer Stellschraubverbindung, besteht.

3. Landwirtschaftliche Erntemaschine nach Anspruch 1, dadurch gekennzeichnet, daß die beiden Tasträder (5,6) an den gegenüberliegenden Seiten der beiden Schwenkarme (12 und 13) angeordnet sind.

4. Landwirtschaftliche Erntemaschine nach Anspruch 3 oder 4, dadurch gekennzeichnet, daß wenigstens einer der beiden Schwenkarme (12,13) an beiden Seiten je ein Tastrad (5 oder 6) trägt.

5. Landwirtschaftliche Erntemaschine nach einem der Ansprüche 1-4, dadurch gekennzeichnet, daß die Verbindungsstrebe (16) an Auslegern (20,20') der beiden Schwenkarme (12,13) angelenkt ist, wenn für diese eine im wesentlichen waagrechte oder schwach zur Waagerechten geneigte Ausgangslage (21) vorgesehen ist.

6. Landwirtschaftliche Erntemaschine nach einem der Ansprüche 1-4, dadurch gekennzeichnet, daß die Verbindungsstrebe (16) unmittelbar an den beiden Schwenkarmen (12,13) angelenkt ist, wenn für diese eine zur Waagerechten geneigte Ausgangslage (22) vorgesehen ist.

7. Landwirtschaftliche Erntemaschine nach einem der Ansprüche 1 bis 6, dadurch gekennzeichnet, daß die Verbindungsstrebe (16) mit einem Federelement (23) versehen ist, das erst bei Überschreiten der im Betrieb auftretenden Grundbelastung anspricht und vorzugsweise aus einem Druckfederpaket besteht.

8. Landwirtschaftliche Erntemaschine nach einem der Ansprüche 1 bis 7, dadurch gekennzeichnet, daß die Verbindungsstrebe (16) an den Anlenkstellen (30,30') wenigstens eines Schwenkarmes (12 oder 13) in unterschiedlichen Lagen einstellbar ist.

9. Landwirtschaftliche Erntemaschine nach Anspruch 1, dadurch gekennzeichnet, daß die Schwenkarmlager (14,15) der Schwenkarme (12,13) auf der gleichen Seite (25 oder 26) einer Montageplatte (24) angebracht sind, vorzugsweise an deren Außenseite (25) die vom Tragrahmen (7) abgewandt ist.

10. Landwirtschaftliche Erntemaschine nach dem vorhergehenden Anspruch, dadurch gekennzeichnet, daß die Montageplatte (24) mit einem Radachssitz (27) für eine Radachse (8) des Tragrahmens (7) und mit wenigstens einem Anschlag (28) oder einer Verriegelung für deren Festlegung versehen ist.

11. Landwirtschaftliche Erntemaschine nach Anspruch 1 oder 10, dadurch gekennzeichnet, daß die Schwenkarmlager (14,15) der Schwenkarme (12,13) für die Tasträder (5,6) in einem, im Verhältnis zur Länge der Schwenkarme (12,13) geringen Abstand (29) voneinander und vorzugsweise zueinander in einer in Ausgangslage (21,22) im wesentlichen waagrechten Ebene angeordnet sind.

12. Landwirtschaftliche Erntemaschine, insbesondere Heuwerbungsmaschine zum Schwaden (2) von Halmgut, nach Anspruch 1 und/oder einem der vorhergehenden Ansprüche, dadurch gekennzeichnet, daß die Tast- und Stützrädervorrichtung (1) an jeder an dem Tragrahmen (7) angebrachten Radachse (8), oder an deren Stelle, befestigt ist.

13. Landwirtschaftliche Erntemaschine, insbesondere Heuwerbungsmaschine zum Zetten und Breitstreuen (3), nach Anspruch 1 und/oder einem der vorhergehenden Ansprüche, dadurch gekennzeichnet, daß sie mit mindestens zwei inneren Rechrädern (31,31') versehen ist, an deren Rechradachsen je eine solche Tast- und Stützrädervorrichtung (1) angebracht ist.

## Claims

1. Agricultural harvester with a mounting frame or implement frame (7), to which a depth wheel device is attached that includes horizontally aligned wheel axles (8) to which the depth wheels are pivoted and to which swivel arms (12, 13) are attached that are pivoted in horizontal distance from each other to swivel arm pivots (14, 15) including a connecting rod (16) being hinged - seen in the direction of operation - to a front swivel arm (12) and a rear swivel arm (13), characterised in that the swivel arms (12, 13) are pivoted to horizontally aligned swivel arm pivots (14, 15) and in that, in relation to the direction of operation (10), the front swivel arm (12) is pivoted to the front swivel arm pivot (14) and is aligned with the direction of operation (10), the rear swivel arm (13) being pivoted to the rear swivel arm pivot (15) and aligned against the direction of operation (10) and in that at least the connecting rod (16) of one side of the mounting frame or implement frame (7) includes a longitudinally adjustable adjusting device (19) or a spring device (23).

2. Agricultural harvester according to claim 1, characterised in that the connecting rod (16) consists basically of a longitudinally adjustable adjusting device (19), especially in the form of an adjusting screw device.

3. Agricultural harvester according to claim 1, characterised in that both depth wheels (5, 6) are arranged on the opposite sides of both swivel arms (12 and 13).

4. Agricultural harvester according to claim 3 or 4, characterised in that at least one of both swivel arms (12, 13) supports on both sides one depth wheel (5 or 6) respectively.

5. Agricultural harvester according to one of the claims 1-4, characterised in that the connecting rod (16) is articulated to arms (20, 20') of both swivel arms (12, 13), if they are intended to have a basically horizontal or slightly horizontally inclined starting position (21).

6. Agricultural harvester according to one of the claims 1-4, characterised in that the connecting rod (16) is directly articulated to both swivel arms (12, 13), if they are intended to have a horizontally inclined starting position (22).

7. Agricultural harvester according to one of the claims 1 to 6, characterised in that the connecting rod (16) is provided with a spring device (23) that responds only at the exceeding of the basic load ocurring in operation and in that it preferably consists of a pression spring device.

8. Agricultural harvester according to one of the claims 1 to 7, characterised in that the connecting rod (16) is adjustabble at the coupling points (30, 30') of at least one swivel arm (12 or 13) in different positions.

9. Agricultural harvester according to claim 1, characterised in that the swivel arm pivots (14, 15) of the swivel arms (12, 13) are attached to the same side (25 or 26) of a mounting panel (24), preferably to their exterior side (25) that is turned off from the mounting frame (7).

10. Agricultural harvester according to the preceding claim, characterised in that the mounting panel (24) is provided with a wheel axle bearing (27) for a wheel axle (8) of the mounting frame (7) and with at least one stop device (28) or a locking device for its fixation.

11. Agricultural harvester according to claim 1 or 10, characterised in that the swivel arm pivots (14, 15) of the swivel arms (12, 13) for the depth wheels (5, 6) are arranged in a distance (29) from each other that is short in relation to the length of the swivel arms (12, 13) and in that they are preferably arranged towards each other in a plane that is basically horizontal when being in the starting position (21, 22).

12. Agricultural harvester, especially haymaking machine for the swathing (2) of blade material, according to claim 1 and/or one of the preceding claims, characterised in that the depth wheel device (1) is mounted to each of the wheel axles (8) that are attched to the mounting frame (7).

13. Agricultural harvester, especially haymaking machine for the tedding and full-width spreading (3) according to claim 1 and/or one of the preceding claims, characterised in that it is provided with at least two interior rake wheels (31, 31') to the rake wheel axles of which one such depth wheel device (1) is attached respectively.

## Revendications

1. Machine de récolte agricole comprenant un châssis porteur ou à engins sur lequel est monté un dispositif à roues tâteuses ou de support, dans lequel les roues tâteuses sont montées sur des essieux (8) orientés horizontalement sur lesquels sont montés des bras pivotants (12, 13) montés dans des paliers (14, 15) à distance l'un de l'autre en direction horizontale et comprenant une entretoise de liaison (16) par laquelle, vue en direction du travail, sont reliés de façon articulée et entraînée un bras pivotant avant (12) et un bras pivotant arrière (13), caractérisée en ce que les bras pivotants (12, 13) sont montés dans des paliers (14, 15) alignés horizontalement, et par rapport à la direction (10) du travail, le bras pivotant avant (12) est monté dans le palier avant (14) et orienté dans la direction de travail (10), alors que le bras pivotant arrière (13) est monté dans le palier arrière (15) et orienté en sens contraire à la direction de travail (10), et l'entretoise de liaison (16) d'au moins un côté du châssis porteur ou à engins (7) comprend un élément de réglage (19) réglable en longueur ou un élément à ressorts (23).

2. Machine de récolte agricole selon la revendication 1, caractérisée en ce que l'entretoise de liaison (16) est constituée essentiellement par un élément de réglage (19) déplaçable en longueur, en particulier sous la forme d'une liaison à vis de réglage.

3. Machine de récolte agricole selon la revendication 1, caractérisée en ce que les deux roues tâteuses (5, 6) sont disposées sur les côtés opposés des deux bras pivotants (12 et 13).

4. Machine de récolte agricole selon la revendication 2 ou 3, caractérisée en ce que l'un au moins des deux bras pivotants (12, 13) supporte sur ses deux côtés une roue tâteuse (5 ou 6).

5. Machine de récolte agricole selon l'une quelconque des revendications 1 à 4, caractérisée en ce que l'entretoise de liaison (16) est articulée sur des bras (20, 20') des deux bras pivotants (12, 13) quand il est prévu pour ceux-ci une position de départ (21) qui est sensiblement horizontale ou légèrement inclinée par rapport à la direction horizontale.

6. Machine de récolte agricole selon l'une quelconque des revendications 1 à 4, caractérisée en ce que l'entretoise de liaison (16) est articulée directement sur les deux bras pivotants (12, 13) quand il est prévu pour ceux-ci une position de départ (22) inclinée par rapport à la direction horizontale.

7. Machine de récolte agricole selon l'une quelconque des revendications 1 à 6, caractérisée en ce que l'entretoise de liaison (16) est munie d'un élément à ressort (23) qui répond seulement en cas de dépassement de la charge de base qui apparaît pendant le fonctionnement et est constitué de préférence par un paquet de ressorts de pression.

8. Machine de récolte agricole selon l'une quelconque des revendications 1 à 7, caractérisée en ce que l'entretoise de liaison (16) peut être réglée dans des positions différentes dans les points de raccordement (30, 30') d'au moins un bras pivotant (12 ou 13).

9. Machine de récolte agricole selon la revendication 1, caractérisée en ce que les paliers (14, 15) des bras pivotants (12, 13) sont montés sur le même côté (25 ou 26) d'une plaque de montage (24), de préférence sur son côté externe (25) qui est à l'opposé du châssis porteur (7).

10. Machine de récolte agricole selon l'une quelconque des revendications précédentes, caractérisée en ce que la plaque de montage (24) est munie d'un siège (27) pour un essieu de roue (8) du châssis porteur (7) et d'au moins une butée (28) ou d'un verrouillage pour sa fixation.

11. Machine de récolte agricole selon la revendication 1 ou 10, caractérisée en ce que les paliers (14, 15) des bras pivotants (12, 13) des roues tâteuses (5, 6) sont disposés à faible distance (29) l'un de l'autre par rapport à la longueur des bras pivotants (12, 13) et de préférence l'un à côté de l'autre dans un pan sensiblement horizontal dans la position de départ (21, 22).

12. Machine de récolte agricole, notamment machine de fenaison pour former des andains (2) de végétaux à tiges selon la revendication 1 et/ou l'une des revendications précédentes, caractérisée en ce que le dispositif à roues tâteuses et de support (1) est fixé sur chaque essieu de roue (8) monté sur le châssis porteur (7) ou en son emplacement.

13. Machine de récolte agricole, notamment faneuse pour l'épandage et l'étalement en largeur (3) selon la revendication 1 et/ou l'une des revendications précédentes, caractérisée en ce que chaque dispositif à roues tâteuses et de support (1) qui est muni d'au moins deux roues de ratissage internes (31, 31') est monté sur son essieu de roue de ratissage.
